# FASCICULE DE BREVET EUROPEEN

(11) **EP 1 470 428 B1**
(45) Date de publication et mention de la délivrance du brevet: **22.09.2010**
(21) Numéro de dépôt: 03715060.4
(22) Date de dépôt: 28.01.2003
(51) Int. Cl.: G01P 3/44

(54) **SUPPORT DE FIXATION, PALIER A ROULEMENT ET PROCEDE DE MONTAGE ASSOCIES**
MONTAGEKLAMMER, WALZENLAGER UND ENTSPRECHENDES ZUSAMMENBAUVERFAHREN
MOUNTING BRACKET, ROLLER BEARING AND CORRESPONDING ASSEMBLY METHOD

(30) Priorité: 29.01.2002 FR 0201052
(43) Date de publication de la demande: 27.10.2004
(73) Titulaire: Aktiebolaget SKF, 415 50 Göteborg (SE)
(72) Inventeur: NIARFEIX, François, F-37000 Tours (FR)
(74) Mandataire: Casalonga, Axel
(86) Numéro de dépôt international: PCT/FR2003/000264
(87) Numéro de publication internationale: WO 2003/065051

(56) Documents cités:
- EP-A- 0 520 853
- EP-A- 0 553 716
- DE-U- 9 418 459

## Description

La présente invention a pour objet un support de fixation du type utilisé pour la fixation d'un ensemble capteur ou codeur sur une bague d'un palier à roulement instrumenté, et un procédé de montage associé.

Un palier à roulement instrumenté comprend généralement une bague tournante, une bague non tournante, un ensemble codeur fixé sur la bague tournante, et un ensemble capteur fixé sur la bague non tournante (voir par exemple EP-A-0 553 716). Les moyens de fixation de l'ensemble capteur ou codeur sur une bague doivent permettre d'éviter une mauvaise fixation qui entraînerait des erreurs de mesures ou une désolidarisation de l'ensemble capteur ou codeur et de la bague correspondante, rendant le palier à roulement instrumenté inutilisable.

On connaît, par le document FR 0 376 771, un support d'ensemble capteur de palier à roulement instrumenté comprenant un tambour découpé à une extrémité en une pluralité de languettes élastiques circonférentiellement espacées, chaque languette étant pourvue à son extrémité libre d'un crochet s'étendant en saillie dans une rainure de la bague non tournante. Le support est fixé à la bague non tournante par interférence radiale entre les crochets et la rainure. Lors du montage, on presse axialement le support contre la bague non tournante. Les languettes élastiques se déforment en fléchissant radialement pour permettre le passage des crochets et le rapprochement axial du support et de la bague. Lorsque les crochets se trouvent en regard de la rainure, les languettes reprennent leur position initiale, les crochets venant en saillie dans la rainure.

Les languettes possédant une longueur faible, un effort important doit être exercé pour parvenir à fléchir les languettes en vue de l'encliquetage des crochets. Le fléchissement des languettes nécessaire au passage des crochets dépend en outre de l'interférence radiale entre les crochets et la bague non tournante. Une interférence radiale trop importante se traduit par un effort de montage important, entraînant un risque de rupture des languettes lors du montage. Une interférence radiale trop faible facilite le montage du support sur la bague, mais s'accompagne d'un risque d'une mauvaise fixation dudit support et de désolidarisation du support et de la bague. Par ailleurs, l'interférence radiale est difficile à maîtriser car elle dépend des tolérances de fabrication de la bague et du support.

Un tel support de fixation n'est donc pas satisfaisant car il présente des risques de rupture lors de son montage, et des risques de fixation insuffisante lors de son utilisation.

La présente invention a pour objet un support de fixation permettant une fixation sûre et fiable sur un élément de révolution, sans risques de rupture du support de fixation lors de son montage.

L'invention a également pour objet un support de fixation permettant un montage avec déformation à l'aide d'efforts appliqués faibles évitant un risque de rupture de support de fixation.

L'invention a encore pour objet un support permettant une fixation sur un élément de révolution avec un verrouillage du support pour éviter un démontage inopiné.

Un tel support comprend une partie de fixation sur un élément de révolution, ladite partie de fixation comprenant un corps en forme générale d'anneau, pourvu d'une saillie radiale annulaire, le corps comprenant une ouverture permettant une variation du diamètre dudit corps lors d'un montage en vue d'un engagement de la saillie dans une rainure correspondante de l'élément de révolution pour permettre une fixation par interférence radiale, un verrou étant apte à interdire après son montage une telle variation de diamètre du corps.

La formation d'une ouverture dans le corps permet une variation de diamètre du corps par un rapprochement des bords du corps délimitant l'ouverture. La variation de diamètre du corps se fait par un effort faible, tout en permettant une variation de diamètre suffisante pour permettre le passage de la saillie annulaire vers la rainure correspondante de l'élément de révolution, sans risquer de rupture du corps ou de la saillie annulaire. Lorsque la saillie annulaire se trouve en regard de la rainure, le corps reprend sa forme initiale. La saillie est introduite dans la rainure, avec un léger jeu ou avec un serrage, pour maintenir le support sur l'élément de révolution par interférence radiale. Le montage facile et sans risque de rupture du support permet de prévoir une saillie annulaire permettant, après montage, une interférence radiale importante, apte à assurer le maintien convenable de la partie de fixation sur l'élément de révolution.

Dans un mode de réalisation, la saillie annulaire est interrompue dans un secteur angulaire diamétralement opposé à l'ouverture. La saillie annulaire est ainsi divisée en deux secteurs d'accrochage. L'utilisation d'une saillie annulaire continue dans des secteurs angulaires étendus permet un maintien amélioré de la partie de fixation sur l'élément de révolution. L'interruption de la saillie annulaire dans un secteur angulaire diamétralement opposé à l'ouverture permet de limiter l'effort nécessaire à la variation de diamètre du corps. L'interruption de la saillie permet en outre de faciliter l'encliquetage de la saillie lors du montage du support en facilitant le passage de la saillie.

Dans un mode de réalisation, le corps comprend des oreilles en saillie radiale vers l'extérieur, à partir d'une zone située à proximité de bords délimitant l'ouverture. Les oreilles en saillie radiale vers l'extérieur facilitent l'application d'un effort de variation du diamètre du corps. Les oreilles peuvent encore servir de portion de fixation pour des éléments portés par le support de fixation.

Dans un mode de réalisation, le verrou comprend une portion rigide de forme concordante à l'ouverture, et apte à être inséré dans l'ouverture. Une fois le verrou inséré dans l'ouverture, ce dernier interdit un rapprochement des bords du corps délimitant l'ouverture, et interdit en conséquence une diminution du diamètre du corps, ce qui évite un détachement du support de fixation. Un tel verrou est adapté dans le cas où la fixation du support sur l'élément de révolution se fait par une diminution du diamètre du corps.

Dans un mode de réalisation, le verrou comprend un élément rigide en appui sur au moins une portée cylindrique du corps. L'élément rigide, en appui sur une portée cylindrique, interdit une déformation radiale d'extension ou de contraction de la portée cylindrique, et donc du corps.

Dans un mode de réalisation, le corps comprend un prolongement cylindrique axial formant une portée cylindrique de verrouillage.

Avantageusement, le verrou comprend une portion de disque en appui sur une portée cylindrique intérieure du prolongement cylindrique axial. La portion de disque est adaptée pour interdire une diminution du diamètre du corps.

Avantageusement, le verrou comprend un capot rigide pourvu d'une rainure annulaire apte à s'engager avec le prolongement cylindrique axial. Le prolongement cylindrique axial venant en saillie dans une rainure annulaire d'un capot rigide, ce dernier interdit une augmentation ou une diminution du diamètre du corps.

L'invention concerne également un dispositif de palier à roulement instrumenté, comprenant une bague non tournante et un moyen capteur, une partie tournante comprenant une bague tournante et un moyen codeur, des éléments roulants disposés entre des chemins de roulement des bagues tournantes et non tournantes, le moyen capteur comprenant en outre un support de fixation sur la bague non tournante selon un aspect de l'invention.

Avantageusement, le verrou et/ou le corps du support porte des éléments de détection du moyen capteur. Le verrou et/ou le corps du support peuvent également porter des moyens de traitement d'un signal de mesure du type transmis par un où plusieurs éléments de détection. De préférence, le verrou comprend une portion de connexion comprenant des moyens de connexion, en vue de la transmission de signaux correspondants à des paramètres de rotation.

L'invention concerne encore un procédé de montage d'un palier à roulement instrumenté, comprenant une partie non tournante comprenant une bague non tournante et un moyen capteur, une partie tournante comprenant une bague tournante et un moyen codeur, des éléments roulants disposés entre des chemins de roulement des bagues tournantes et non tournantes, dans lequel on fixe le moyen capteur sur la bague non tournante à l'aide d'un support par une variation de diamètre d'un corps du support et engagement d'une saillie du corps dans une rainure correspondante de la bague non tournante pour permettre une fixation par interférence radiale, et on interdit une variation de diamètre du corps à l'aide d'un verrou.

La présente invention et ses avantages seront mieux compris à l'étude de la description détaillée de modes de réalisation pris à titre d'exemples nullement limitatifs et illustrés par les dessins annexés, sur lesquels :
- la figure 1 est une vue en coupe axiale d'un palier à roulement instrumenté comprenant un support selon un aspect de l'invention ;
- la figure 2 est une vue de face en élévation du support de la figure 1 ;
- la figure 3 est une vue de face en élévation du support de la figure 2 déformé ;
- la figure 4 est une vue en coupe axiale du palier à roulement de la figure 1 lors d'une première étape de montage du support ;
- la figure 5 est une vue en coupe axiale du palier à roulement de la figure 1 lors d'une seconde étape de montage du support ;
- la figure 6 est une vue de face en élévation du palier à roulement de la figure 1 lors d'une troisième étape de montage du support ;
- la figure 7 est une vue de face d'un capot destiné au support ;
- la figure 8 est une vue en coupe axiale du palier à roulement de la figure 6 équipé du capot de la figure 7 ;
- la figure 9 est une vue de face en élévation d'un support selon un second mode de réalisation ;
- la figure 10 est une vue de face en élévation d'un palier à roulement instrumenté équipé du support selon la figure 9 ;
- la figure 11 est une vue en coupe axiale du palier à roulement de la figure 10 lors d'une étape de montage d'un capot ; et
- la figure 12 est une vue en coupe axiale du dispositif de la figure 11 après montage.

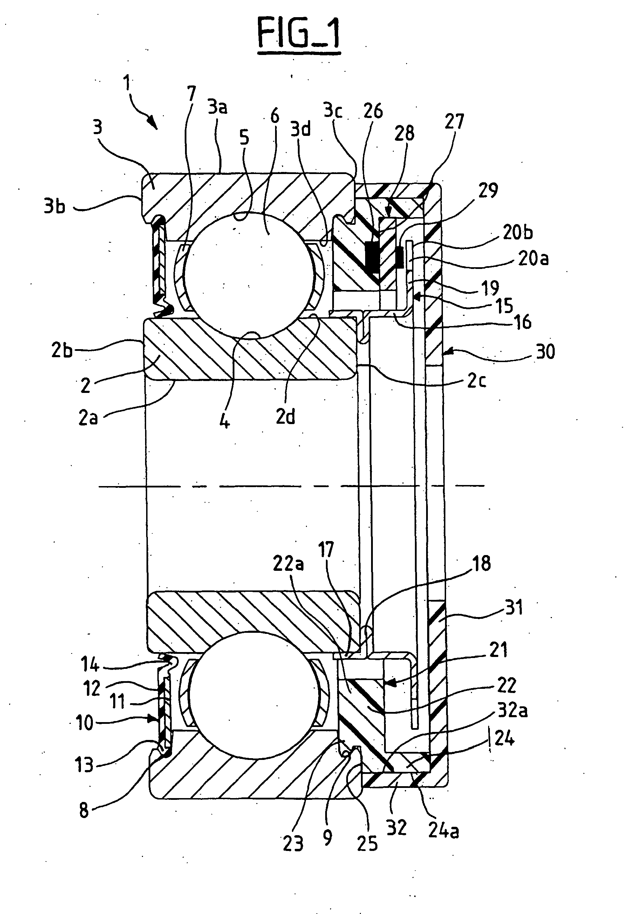

Sur la figure 1, un palier à roulement instrumenté, référencé 1 dans son ensemble, comprend une bague intérieure tournante 2 et une bague extérieure non tournante 3. La bague tournante 2 est pourvue d'un alésage 2a, de faces radiales latérales 2b, 2c, et d'un chemin de roulement toroïdal 4 formé sur une surface cylindrique extérieure 2d. La bague non tournante 3 comprend une surface cylindrique extérieure 3a, des faces radiales latérales 3b, 3c et un chemin de roulement toroïdal 5 formé sur une surface intérieure 3d. Des éléments roulants 6, ici des billes, sont disposés entre les chemins de roulement 4, 5 des bagues tournantes 2 et non tournantes 3. Les éléments roulants 6 sont maintenus circonférentiellement espacés par une cage 7.

La bague non tournante 3 comprend sur sa surface intérieure 3d une première rainure annulaire 8 située axialement à proximité d'une face latérale 3b et une seconde rainure annulaire 9 située axialement à proximité de l'autre face latérale 3c, en étant la symétrique de la rainure annulaire 8 par rapport à un plan radial passant par le centre des éléments roulants 6.

Le palier à roulement 1 comprend un organe d'étanchéité 10 pourvu d'une armature rigide 11 et d'une partie élastique 12 surmoulée sur l'armature rigide 11. La partie élastique 12 comprend un bourrelet 13 en saillie dans la rainure 8 à partir de la zone de plus grand diamètre de la partie élastique 12, en vue de la fixation de l'organe d'étanchéité 10 sur la bague non tournante 3. La partie élastique 12 comprend également une lèvre d'étanchéité 14 s'étendant à partir de la zone de moindre diamètre de la partie élastique 12 et venant, par son bord libre, en contact de frottement avec la surface extérieure 2d de la bague tournante 2.

Le palier à roulement instrumenté 1 comprend un moyen codeur sous la forme d'un anneau codeur 15, par exemple en tôle magnétique, solidaire de la bague tournante 2. L'anneau codeur 15 possède une forme générale de coupelle à section en L comprenant une portion tubulaire 16 dont une extrémité libre 17 est emmanchée sur la surface extérieure 2d de la bague tournante 2. Une portion radiale 18 s'étendant vers l'intérieur est formée par pliage d'une portion intermédiaire de la portion tubulaire 16. L'extrémité 17 de la portion tubulaire 16 est emmanchée sur la bague tournante 2 de sorte que la portion radiale 18 est en contact axial avec la surface latérale 2c de la bague tournante 2.

L'anneau codeur 15 comprend une portion radiale 19 s'étendant vers l'extérieur à partir de l'extrémité de la portion tubulaire 16 opposée à l'extrémité 17. La portion radiale 19 comprend sur son bord libre de plus grand diamètre des encoches 20a de codage formant des languettes 20b alternées circonférentiellement avec lesdites encoches 20a.

Un ensemble capteur comprend un support de fixation 21 comprenant un corps 22 en matière synthétique et en forme générale d'anneau ouvert, entourant la portion tubulaire 16 de l'anneau codeur 15, et étant situé axialement entre les éléments roulants 6 et la portion radiale 19 de l'anneau codeur 15. L'extrémité 22a du corps 22 opposée à la portion radiale 19 se situe en saillie dans l'espace compris entre les bagues tournantes 2 et non tournantes 3. Le support 21 comprend une saillie annulaire 23 s'étendant radialement vers l'extérieur à partir de la périphérie de l'extrémité 22a du corps 22. La saillie radiale annulaire 23 est en concordance de forme avec la rainure 9 de la bague non tournante 3 et est engagée dans la rainure 9 pour la fixation du support 21 sur la bague non tournante 3. Le support 21 comprend une projection cylindrique axiale 24 de forme générale annulaire s'étendant du côté opposé à une surface radiale 25 du corps 22 en contact avec la face latérale 3c de la bague non tournante 3.

Un aimant 26 est noyé dans le corps 22 en affleurant une surface radiale 27 orientée du côté de la portion radiale 19 de l'anneau codeur 15. L'aimant 26 se situe radialement en regard des encoches 20a et des languettes 20b. Le support 21 comprend encore un verrou 28, qui sera décrit par la suite, portant un organe de détection 29 situé axialement entre l'aimant 26 et la portion radiale 19 de l'anneau codeur 15, et radialement en regard des encoches 20a et des languettes 20b de l'anneau codeur 15.

Le palier à roulement 1 comprend un capot de protection 30 des moyens codeur et capteur de forme générale annulaire, en matière synthétique, et comprenant une portion radiale annulaire 31 située du côté de la portion 19 de l'anneau codeur 15 opposé au support 21. Le capot 30 comprend une portion tubulaire 32 entourant la projection cylindrique axiale 24 du support 21. Une portée cylindrique extérieure 24a de la projection cylindrique axiale 24 est en contact avec un alésage 32a de la portion tubulaire 32. La projection cylindrique axiale 24 possède un diamètre extérieur inférieur au diamètre de la surface extérieure 3a de la bague non tournante 3. Le capot 30 est disposé sur le support 21 et enfoncé axialement jusqu'à ce que le bord libre de la portion tubulaire 32 vienne en contact axial contre la surface latérale 3c de la bague non tournante 3. L'extrémité libre de la projection cylindrique axiale 24 vient à proximité ou en contact avec la portion radiale 31. Le diamètre intérieur de la portion radiale 31 est compris entre le diamètre de l'alésage 2a de la bague tournante 2 et le diamètre de la portion tubulaire 16 de l'anneau codeur 15.

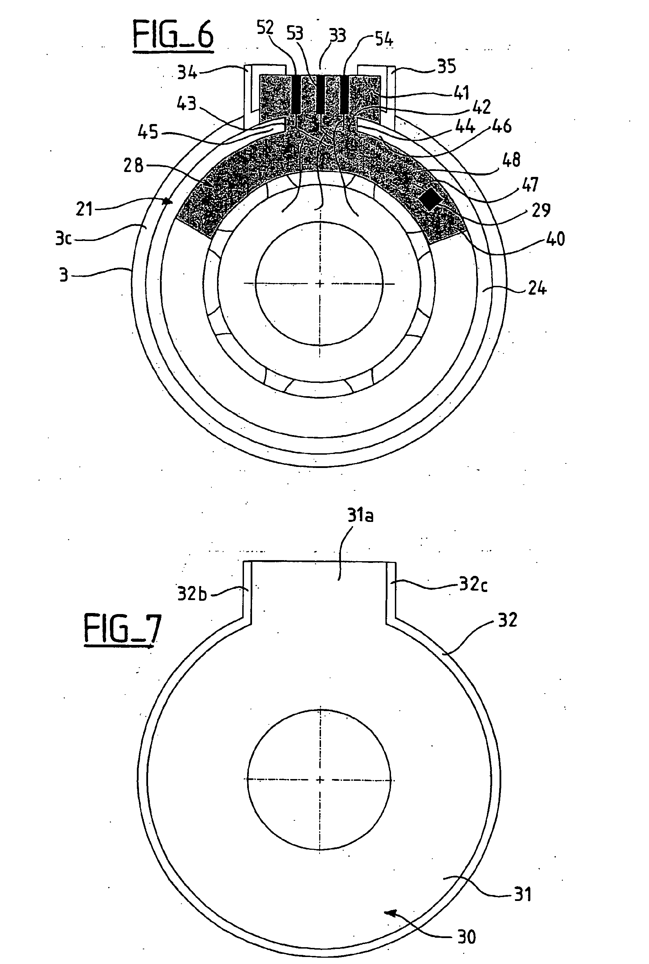

Comme on peut mieux le voir sur la figure 6, le verrou 28 comprend une portion de disque 40 en appui sur une portée cylindrique intérieure 24b de la projection cylindrique axiale 24 du support 21, dans un secteur angulaire situé de part et d'autre de l'ouverture 33. Le verrou 28 est rigide dans son ensemble et comprend une portion radiale de connexion 41, située radialement en regard des oreilles 34, 35 du support 21, en étant reliée à la portion de disque 40 par l'intermédiaire d'une portion centrale radiale 42 plus étroite formant des encoches 43, 44, entre la portion de connexion et la portion de disque 40. Les extrémités 45, 46 de la projection cylindrique axiale 24 adjacentes à l'ouverture 33 viennent en saillie dans les encoches 43, 44, en étant en concordance de forme avec ces dernières. Les encoches 43, 44 peuvent être prévues pour un montage du verrou avec serrage entre les extrémités 45, 46. Le verrou 28 est disposé en contact axialement contre la surface radiale 27 du corps 22.

L'épaisseur de la portion de disque 40 est inférieure à la distance axiale entre la surface 27 du capot orientée vers la portion radiale 19 de l'anneau codeur 15 et ladite portion radiale 19. Le diamètre extérieur de la portion de disque 40 est sensiblement égal au diamètre intérieur de la projection cylindrique axiale 24 du capot 22. Le diamètre intérieur de la portion de disque 40 est sensiblement supérieur au diamètre de la portion tubulaire 16 de l'anneau codeur 15. La portion de disque 40 s'étend sur un secteur angulaire pouvant être compris entre 10° et 360°.

L'organe de détection 29 est porté par la portion de disque 40 en étant décalé angulairement par rapport à l'ouverture 33. L'organe de détection 29 est relié par l'intermédiaire d'une liaison électrique 47 à des moyens de traitement 48 fixés sur la portion de disque 40. Les moyens de traitement 48 sont reliés par des liaisons électriques 49, 50, 51 à des moyens de connexion 52, 53, 54 sous la forme de fiches ou de languettes disposées dans ou sur la partie de connexion 41. Lors de la rotation de la bague tournante 2 par rapport à la bague non tournante 3, l'organe de détection 29 envoie un signal de mesure aux moyens de traitement 48 qui transmettent des signaux correspondant aux paramètres de rotation de la bague tournante 2 par rapport à la bague non tournante 3. Le positionnement angulaire de l'organe de détection 29 est assuré par la coopération du verrou 28 avec les extrémités 45, 46 de la projection cylindrique axiale 24 interdisant un déplacement angulaire du verrou 28 par rapport au support 21.

Le verrou 28 sert de support à des moyens capteurs de l'ensemble d'instrumentation du palier à roulement 1. La partie centrale 42 du verrou 28 interdit un rapprochement des bords 45, 44 de la projection cylindrique axiale 24. En conséquence, le verrou 28 interdit une déformation élastique du corps 22 de diminution du diamètre du corps 22. Le verrou peut donc être avantageusement réalisé à partir de la carte de circuit imprimé, le substrat de la carte assurant la fonction mécanique de verrou tandis que les composants qu'il supporte assurent les fonctions de détection et/ou de traitement du signal et/ou de connexion.

Lors de la rotation de la bague tournante 2, les encoches 20a et des languettes 20b de l'anneau codeur 15 défilent à rotation en regard de l'organe de détection 29. Les encoches 20 perturbent le champ magnétique produit par l'aimant 26. L'organe de détection 29 magnétosensible détecte les variations de champ magnétique et transmet les mesures correspondantes vers des moyens de traitement permettant de connaître par exemple le déplacement, la vitesse ou l'accélération angulaire de la bague tournante 2 par rapport à la bague non tournante 3. Bien entendu, on peut prévoir des moyens de détection différents par exemple du type optique, associés à un anneau codeur pourvu d'une alternance de zones réfléchissantes et non réfléchissantes.

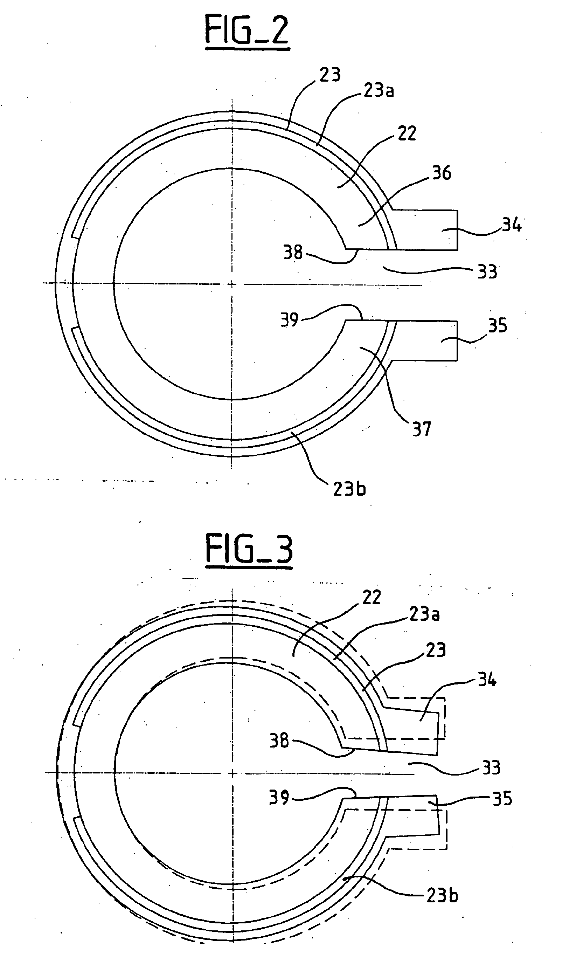

Comme on peut le voir sur la figure 2, le support 21 comprend une ouverture 33. La saillie radiale annulaire 23 est interrompue dans un secteur angulaire opposé à l'ouverture 33. La saillie annulaire 23 est séparée en deux secteurs 23a et 23b diamétralement opposés. Le support 21 comprend des oreilles 34, 35 en saillie radiale vers l'extérieur à partir de zones 36, 37 situées à proximité de bords 38, 39 du corps 22 délimitant l'ouverture 33. L'ouverture 33 confère au support 21 une certaine souplesse radiale.

Sur la figure 3, on a représenté le support 21 dans une configuration où le diamètre du corps 22 a été diminué par application d'un effort et déformation élastique. Pour ce faire, on peut appliquer un effort de rapprochement sur les oreilles 34, 35. Les secteurs 23a, 23b de la saillie annulaire 23 sont rapprochés radialement de façon à permettre leur passage dans l'espace compris entre les bagues tournante 2 et non tournante 3 jusqu'à venir en regard de la rainure 9 dans laquelle ils seront introduits lorsque le corps 22 reprendra sa forme initiale. On a représenté en pointillés la position du support 21 correspondant à la position initiale du corps 22.

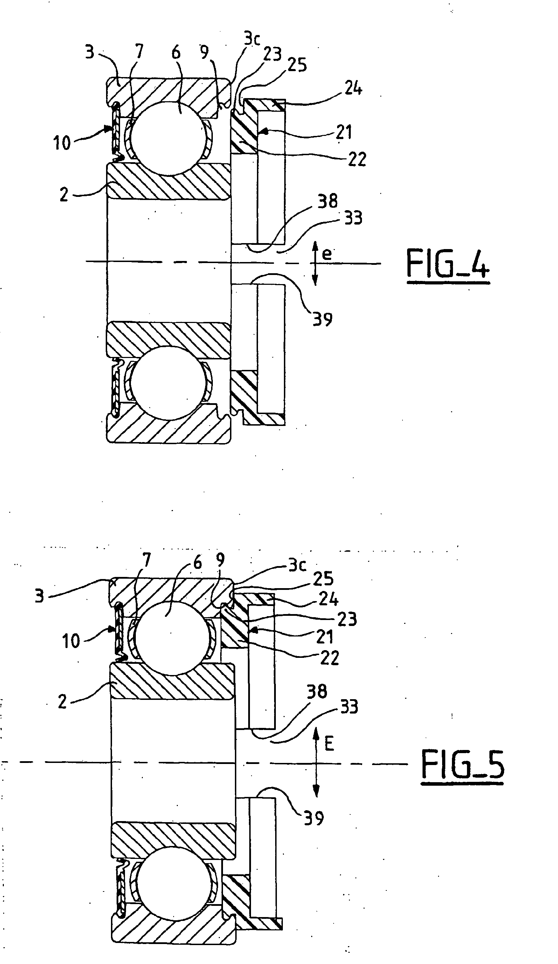

Sur la figure 4, le palier à roulement 1 est partiellement monté et comprend les bagues tournante 2 et non tournante 3, les éléments roulants 6, la cage 7, et l'organe d'étanchéité 10. Le support 21 est déformé élastiquement pour diminuer son diamètre, comme représenté sur la figure 3. Le support 21 est présenté en regard de l'espace entre les bagues tournantes 2 et non tournantes 3, en vue de son rapprochement axial et de sa fixation dans la rainure 9.

Sur la figure 5, le support 21 a été introduit axialement dans l'espace compris entre la bague tournante 2 et la bague non tournante 3, jusqu'à ce que l'épaulement 25 de la projection cylindrique axiale 24 vienne en contact avec la surface latérale 3c de la bague extérieure 3. On relâche l'effort exercé sur les oreilles 34, 35, et le support 21 reprend sa forme initiale, les secteurs 23a, 23b de la saillie annulaire 23 venant en saillie dans la rainure annulaire 9 de la bague non tournante 3. Après retour du support 21 à sa position initiale, l'espacement E entre les bords 38, 39 délimitant l'ouverture 3 (fig. 5), est supérieur à l'espacement e entre ces mêmes bords 38, 39 lors de l'étape précédente d'insertion axiale du support (fig. 4).

Lors d'une troisième étape de montage illustrée par la figure 6, le verrou 28 est monté sur le support 21 afin d'interdire une diminution de diamètre du support 21 pour éviter une désolidarisation du support 21 et la bague non tournante 3. Le verrou 28 empêche ainsi une désolidarisation non souhaitée du support 21 et de la bague non tournante 3. Le verrou 28 est monté de préférence avec un léger serrage.

Le support 21 comprenant un corps 22 de forme générale annulaire muni d'une ouverture 33 peut être facilement déformé élastiquement pour diminuer le diamètre du corps 22 sans risquer une rupture de ce dernier. On peut alors prévoir une saillie annulaire 23 permettant une interférence radiale importante par engagement dans la rainure 9 de la bague non tournante 3, et assurant une fixation sûre de la bague non tournante et du support 21, la facilité de montage du support 21 étant conservée grâce à la déformation suffisante du support sans effort important entraînant un risque de rupture du support 21. Notamment, une interférence radiale de fixation suffisante peut être assurée malgré des variations de diamètre dues aux tolérances de fabrication.

Lors d'une étape de montage suivante, le capot 30 est disposé sur le support 21 grâce à sa portion tubulaire 32 qui vient s'ajuster sur la projection cylindrique axiale 24 du support 21. Comme on peut mieux le voir sur la figure 7, le capot 30 comprend une projection radiale 31a de protection de la partie de connexion 41 du verrou 28, venant radialement en regard de ladite partie de connexion 41. La portion tubulaire 32 est interrompue dans le secteur angulaire de la projection radiale 31a, en se prolongeant radialement vers l'extérieur par des bords 32b, 32c situé de part et d'autre de la projection radiale 31a.

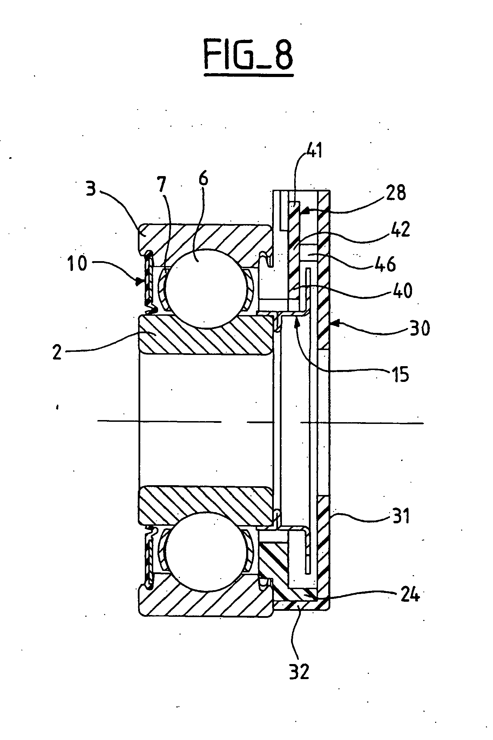

La figure 8 montre une vue en coupe du palier à roulement 1 complètement monté, dans un plan de coupe axiale passant par l'ouverture 33 et par l'interruption de la saillie annulaire 23. La partie centrale 42 du verrou se situe entre les bords de la projection cylindrique axiale, dont un bord 46 est visible entre la partie centrale 42 et la portion radiale 31 du capot 30.

Le verrou 28 interdit une déformation du support 21 en interdisant un rapprochement des bords du corps 22 délimitant l'ouverture 23. Dans un autre mode de réalisation, on prévoit une portion de disque 40 plus étendue angulairement, de sorte qu'elle vient en appui contre une portion de la portée intérieure 24c de la projection cylindrique axiale 24 suffisamment étendue pour interdire une diminution de diamètre du corps 22. Par exemple, la portion de disque 40 peut s'étendre sur un secteur angulaire compris entre 190° et 360°.

La déformation du corps 22 en exerçant un effort de rapprochement des bords 37, 38 délimitant l'ouverture 33 se traduit par un rapprochement diamétral des secteurs d'accrochage 23a, 23b s'effectuant par un rapprochement sensible des portions du corps 22 situées de part et d'autre de l'ouverture 33. La portion du corps 22 diamétralement opposée à l'ouverture subit dans son ensemble une déformation radiale moins importante, comme cela est représenté sur la figure 3. L'interruption de la saillie 23 permet de diminuer la rigidité du corps dans une certaine mesure. D'autre part l'axe passant par l'ouverture 33 et l'interruption de la saillie 23 étant un axe de moindre déformation radiale du corps 22 lors d'un rapprochement des bords 37, 38 délimitant l'ouverture 33, l'interruption de la saillie 23, associée à l'ouverture 33, permet de réduire le diamètre de la saillie selon cet axe pour faciliter le montage du support 21.

Des secteurs d'accrochage 23a, 23b étendus angulairement, sur par exemple 10° à 170°, permettent d'assurer une fixation sûre, la saillie étant rigide, et les efforts de fixation étant répartis. Bien entendu, on pourrait prévoir une saillie divisée en trois ou plusieurs secteurs d'accrochage sans sortir du cadre de l'invention.

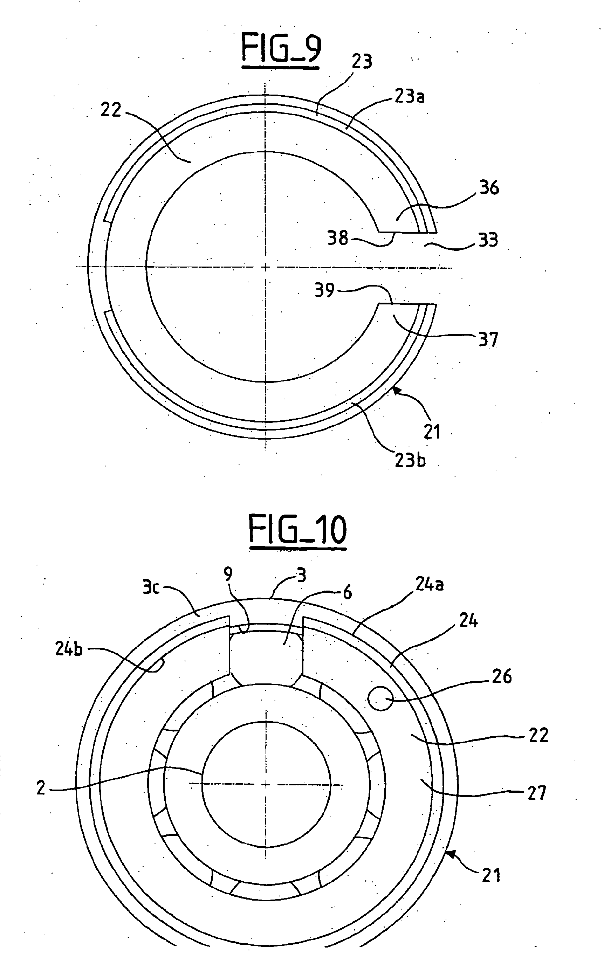

Sur les figures 9 à 12, les références aux éléments semblables aux figures 1 à 8 ont été reprises. Dans ce mode de réalisation, le support 21 (fig. 9) est similaire au support du mode de réalisation précédent, à ceci près qu'il est dépourvu d'oreilles. La figure 10 illustre un palier à roulement 1 sur lequel est fixé le support 21. L'aimant 26 affleurant la surface radiale 27 du corps 22 est décalé angulairement par rapport à l'ouverture 33 du corps 22.

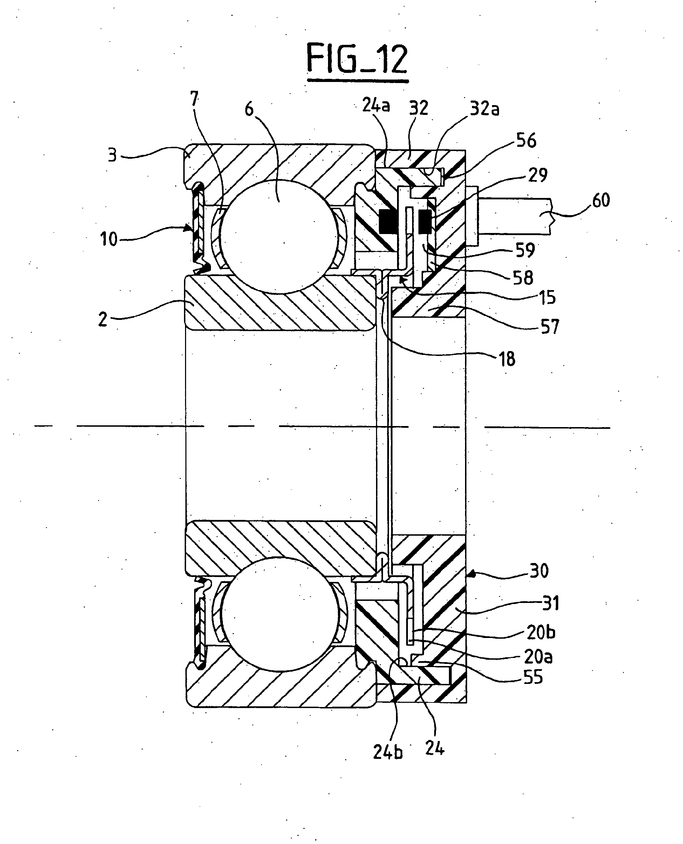

Sur la figure 12, le capot 30 comprend une portion tubulaire 32 entourant la projection cylindrique axiale 24. Un alésage 32a de la portion tubulaire 32 est en contact avec une portée cylindrique extérieure 24a de la projection cylindrique axiale 24. Un bourrelet annulaire 55 s'étend à partir d'une portion radiale 31 du capot 30 en direction des éléments roulants, en formant une rainure annulaire 56 dans laquelle est engagée l'extrémité libre de la projection cylindrique axiale 24. La projection cylindrique axiale 24 forme une portée cylindrique intérieure 24b en contact avec la surface extérieure du bourrelet 55. Le capot 30 comprend une portion centrale tubulaire 57 s'étendant axialement vers la bague tournante 2, à partir de la zone de moindre diamètre de la portion radiale 31. La portion centrale tubulaire 57 s'étend à proximité de la portion radiale 18 de l'anneau codeur 15, pour former un passage étroit d'étanchéité.

Une carte de traitement 58 est logée dans un renfoncement 59 de la portion radiale 31 située en regard de la portion radiale 19 de l'anneau codeur 15. La carte 58 porte un organe de détection 29 situé en regard de l'aimant 26, du côté opposé de la portion radiale 19 de l'anneau codeur 15. Dans cette position, l'organe de détection 29 détecte les variations du champ magnétique créé par l'aimant 26, lesdites variations étant provoquées par le défilement des encoches de codage 20a et de languettes 20b de la portion radiale 19 entre l'aimant 26 et l'organe de détection 29. L'organe de détection 29 est relié de façon non représentée à une sortie 60 de connexion en saillie axialement depuis une face de la portion radiale 31 opposée au palier à roulement 1.

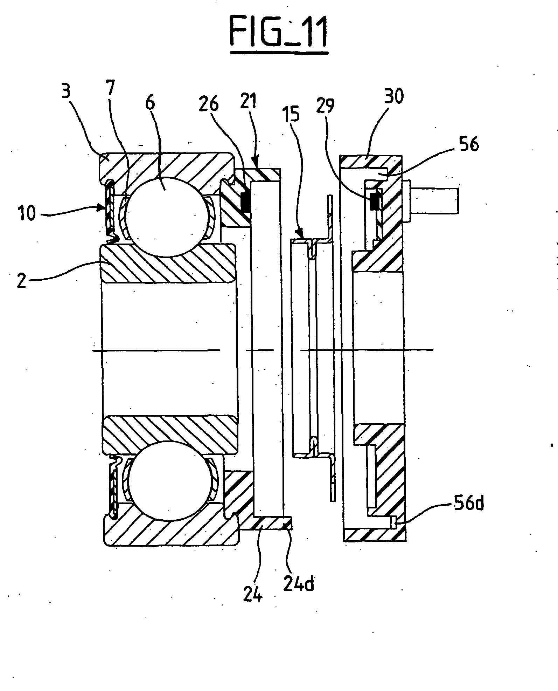

Comme illustré par la figure 11, le support 21 étant monté sur la bague non tournante 3, on emmanche l'anneau codeur 15 sur la bague tournante 2, puis on dispose le capot 30 de façon que l'extrémité libre de la projection cylindrique axiale 24 vienne en saillie dans la rainure 56. On obtient finalement le palier à roulement instrumenté tel que représenté sur la figure 12. La rainure 56 possède une zone plus profonde formant une encoche 56d destinée à coopérer avec une dent 24d en saillie axiale à partir du bord libre de la projection cylindrique axiale 24. L'encoche 56d et la dent 24d forme un moyen d'indexation axiale du capot 30 par rapport au support 21, pour assurer que l'organe de détection 29 se situe bien angulairement en regard de l'aimant 26.

Lorsque le capot 30 est monté (fig. 12), une variation de diamètre du corps 22 du support 21 est interdite par le capot 30. Une diminution de diamètre du support 21 provoque une diminution du diamètre de la projection cylindrique axiale 24, qui vient alors en appui par sa portée intérieure 24b contre la surface extérieure du bourrelet 55. Le bourrelet 55 du capot 30 est rigide et interdit une diminution de diamètre de la projection cylindrique axiale 24. Le capot 30 interdit également une augmentation de diamètre du corps 22, car une telle augmentation se traduirait par une augmentation de diamètre de la projection cylindrique axiale 24, interdite par la portion tubulaire 32 entourant ladite projection cylindrique axiale 24.

La fonction de verrou est assurée par le bourrelet 55 monobloc avec le capot de protection 30. Le bourrelet 55 vient en contact avec une portée cylindrique du support 21 pour empêcher une diminution de diamètre du corps 22 du support. On peut envisager d'autres modes de réalisation permettant de former un partie rigide du capot en contact avec une portée cylindrique du support 21 afin d'empêcher une variation de diamètre du support 21. Par exemple, on peut prévoir une rainure annulaire formée dans la surface 27 du corps 22 orientée vers le capot 30, et une nervure correspondante du capot venant en saillie dans la rainure annulaire, en étant en contact avec une portée cylindrique de la rainure.

On a décrit des modes de réalisation dans lesquels le support 21 est monté sur un élément de révolution, ici des bagues d'un palier à roulement, en procédant à une déformation du support 21 par une diminution de son diamètre. Dans des modes de réalisation différents, une augmentation du diamètre du support peut être nécessaire à son montage. Par exemple, on peut désirer fixer un support par encliquetage dans une rainure d'une surface extérieure d'une bague intérieure ou extérieure d'un palier à roulement. On prévoira alors une saillie annulaire dirigée radialement vers l'intérieur pour coopérer avec ladite rainure. Une augmentation du diamètre de support sera alors nécessaire pour encliqueter la saillie annulaire dans la rainure. On prévoira un verrou permettant d'interdire une augmentation du diamètre du corps du support.

Grâce à l'invention, on obtient un support de fixation sur un élément de révolution pouvant être fixé sur le support de façon sûr, et sans risque du support lors de son montage. Le support de fixation permet un montage sur l'élément de fixation avec un effort faible en regard de sa limite de rupture, en assurant une interférence radiale de fixation suffisante.

## Revendications

1. Support (21) comprenant une partie de fixation sur un élément de révolution (3), **caractérisé par le fait que** ladite partie de fixation comprend un corps (22) en forme générale d'anneau, pourvu d'une saillie radiale annulaire (23), le corps comprenant une ouverture (33) permettant une variation du diamètre dudit corps (22) lors d'un montage en vue d'un engagement de la saillie (23) dans une rainure (9) correspondante de l'élément de révolution (3) pour permettre une fixation par interférence radiale, un verrou (28) étant apte à interdire après son montage une telle variation de diamètre du corps (22).

2. Support selon la revendication 1, **caractérisé par le fait que** la saillie annulaire (23) est interrompue dans un secteur angulaire diamétralement opposé à l'ouverture.

3. Support selon l'une quelconque des revendications 1 ou 2, **caractérisé par le fait que** le corps (22) comprend des oreilles (34, 35) en saillie radiale vers l'extérieur à partir d'une zone située à proximité de bords délimitant l'ouverture (33).

4. Support selon l'une quelconque des revendications précédentes, **caractérisé par le fait que** le verrou (28) comprend une portion rigide (42) de forme concordante à l'ouverture (33), et apte à être inséré dans l'ouverture (33).

5. Support selon l'une quelconque des revendications précédentes, **caractérisé par le fait que** le verrou (28) comprend un élément rigide (50) en appui sur au moins une portée cylindrique (24c) du corps (22).

6. Support selon la revendication 5, **caractérisé par le fait que** le corps (22) comprend un prolongement cylindrique axial (24) formant une portée cylindrique de verrouillage (24c).

7. Support selon la revendication 6, **caractérisé par le fait que** le verrou (28) comprend une portion de disque (40) en appui sur une portée cylindrique intérieure (40) du prolongement cylindrique axial.

8. Support selon la revendication 6, **caractérisé par le fait que** le verrou (28) comprend un capot rigide (30) pourvu d'une rainure annulaire (56) apte à s'engager avec le prolongement cylindrique axial (24).

9. Dispositif de palier à roulement instrumenté (1), comprenant une bague non tournante (3) et un moyen capteur (26, 29), une partie tournante comprenant une bague tournante (2) et un moyen codeur (15), des éléments roulants (6) disposés entre des chemins de roulement (4, 5) des bagues tournantes (2) et non tournantes (3), **caractérisé par le fait que** le moyen capteur comprend un support (21) de fixation sur la bague non tournante (3) selon l'une quelconque des revendications précédentes.

10. Dispositif selon la revendication 9, **caractérisé par le fait que** le verrou (28) et/ou le corps (22) du support (21) porte des éléments de détection (29, 26) du moyen capteur.

11. Dispositif selon l'une quelconque des revendications 9 ou 10, **caractérisé par le fait que** le verrou (28) et/ou le corps (22) du support (21) porte des moyens de traitement (48) d'un signal de mesure.

12. Dispositif selon l'une quelconque des revendications 9 à 11, **caractérisé par le fait que** le verrou (28) comprend une portion de connexion (41) portant des moyens de connexion (52, 53, 54).

13. Procédé de montage d'un palier à roulement instrumenté (1), comprenant une partie non tournante comprenant une bague non tournante (3) et un moyen capteur, une partie tournante comprenant une bague tournante (2) et un moyen codeur, des éléments roulants (6) disposés entre des chemins de roulement (4, 5) des bagues tournantes (2) et non tournantes (3), **caractérisé par le fait que** l'on fixe le moyen capteur sur la bague non tournante (3) à l'aide d'un support (21) par une variation de diamètre d'un corps (22) du support (21) et engagement d'une saillie (23) du corps (22) dans une rainure correspondante de la bague non tournante (3) pour permettre une fixation par interférence radiale, et on interdit une variation de diamètre du corps (22) à l'aide d'un verrou (28).

## Claims

1. Bracket (21) comprising a part for mounting it on an axisymmetric element (3), **characterized in that** said mounting part comprises a body (22) in the general shape of a ring and provided with an annular radial projection (23), the body comprising an opening (33) allowing a variation in the diameter of said body (22) during assembly so as to engage the projection (23) in a corresponding groove (9) in the axisymmetric element (3) to allow mounting by radial interference, a locking means (28) being capable, after assembly thereof, of prohibiting any such variation in the diameter of the body (22).

2. Bracket according to Claim 1, **characterized in that** the annular projection (23) is interrupted in an angular sector diametrically opposed to the opening.

3. Bracket according to either one of Claims 1 and 2, **characterized in that** the body (22) comprises lugs (34, 35) projecting radially outward from a region situated close to edges delimiting the opening (33).

4. Bracket according to any one of the preceding claims, **characterized in that** the locking means (28) comprises a rigid portion (42) whose shape matches the opening (33) and which is capable of being inserted into the opening (33).

5. Bracket according to any one of the preceding claims, **characterized in that** the locking means (28) comprises a rigid element (50) bearing on at least one cylindrical supporting surface (24c) of the body (22).

6. Bracket according to Claim 5, **characterized in that** the body (22) comprises an axial cylindrical extension (24) forming a locking cylindrical supporting surface (24c).

7. Bracket according to Claim 6, **characterized in that** the locking means (28) comprises a disk portion (40) bearing on an inner cylindrical supporting surface (40) of the axial cylindrical extension.

8. Bracket according to Claim 6, **characterized in that** the locking means (28) comprises a rigid cap (30) provided with an annular groove (56) capable of engaging with the axial cylindrical extension (24).

9. Instrumented rolling bearing device (1) comprising a nonrotating race (3) and a sensor means (26, 29), a rotating part comprising a rotating race (2) and an encoder means (15), rolling elements (6) arranged between raceways (4, 5) of the rotating race (2) and nonrotating race (3), **characterized in that** the sensor means comprises a bracket (21) for mounting it on the nonrotating race (3) according to any one of the preceding claims.

10. Device according to Claim 9, **characterized in that** the locking means (28) and/or the body (22) of the bracket (21) bears detection elements (29, 26) of the sensor means.

11. Device according to either one of Claims 9 and 10, **characterized in that** the locking means (28) and/or the body (22) of the bracket (21) bears means (48) for processing a measurement signal.

12. Device according to any one of Claims 9 to 11, **characterized in that** the locking means (28) comprises a connection portion (41) bearing connection means (52, 53, 54).

13. Method of assembling an instrumented rolling bearing (1) comprising a nonrotating part comprising a nonrotating race (3) and a sensor means, a rotating part comprising a rotating race (2) and an encoder means, rolling elements (6) arranged between raceways (4, 5) of the rotating race (2) and nonrotating race (3), **characterized in that** the sensor means is mounted on the nonrotating race (3) with the aid of a bracket (21) by varying the diameter of a body (22) of the bracket (21) and engaging a projection (23) of the body (22) in a corresponding groove in the nonrotating race (3) to allow mounting by radial interference, and any variation in the diameter of the body (22) is prohibited with the aid of a locking means (28).

## Patentansprüche

1. Träger (21), der einen Teil zum Befestigen an einem Drehelement (3) aufweist, **dadurch gekennzeichnet, dass** der Befestigungsteil einen Körper (22) in der Grundform eines Ringes aufweist, der mit einem ringförmigen Radialvorsprung (23) versehen ist, wobei der Körper eine Öffnung (33) besitzt, die eine Veränderung des Durchmessers des Körpers (22) bei einer Montage im Hinblick auf einen Eingriff des Vorsprungs (23) in einer Nut (9) erlaubt, die dem Drehelement (3) zugeordnet ist, um eine Befestigung durch radialen Eingriff zu ermöglichen, wobei ein Riegel (28) geeignet ist, nach seiner Montage eine solche Veränderung des Durchmessers des Körpers (22) zu verwehren.

2. Träger nach Anspruch 1, **dadurch gekennzeichnet, dass** der Ringvorsprung (23) diametral entgegengesetzt zu einer Öffnung in einem Winkelsektor unterbrochen ist.

3. Träger nach Anspruch 1 oder 2, **dadurch gekennzeichnet**, das der Körper (22) Ohren (34,35) aufweist , die von einem Bereich, der nahe der die Öffnung (33) begrenzenden Flanken liegt, sich radial nach außen erstrecken.

4. Halter nach einem der vorhergehenden Ansprüche, **dadurch gekennzeichnet, dass** der Riegel (28) einen steifen Bereich (42) von einer der Öffnung (33) entsprechenden Form aufweist und geeignet ist, in die Öffnung (33) eingefügt zu werden.

5. Halter nach einem der vorhergehenden Ansprüche, **dadurch gekennzeichnet, dass** der Riegel (28) ein steifes Element (50) in Anlage an wenigstens einer zylindrischen Auflagefläche (24c) des Körpers (22) aufweist.

6. Halter nach Anspruch 5, **dadurch gekennzeichnet, dass** der Körper (22) einen axialzylindrischen Fortsatz (24) aufweist, der eine zylindrische Auflagefläche (24c) der Verriegelung bildet.

7. Halter nach Anspruch 6, **dadurch gekennzeichnet, dass** der Riegel (28) einen Scheibenbereich (40) aufweist, der in Anlage an einer zylindrischen Innenfläche (40) des axialzylindrischen Fortsatzes ist.

8. Halter nach Anspruch 6, **dadurch gekennzeichnet, dass** der Riegel (28) eine steife Kappe (30) aufweist, die eine Ringnut (56) aufweist, die geeignet ist, in Eingriff mit dem axialzylindrischen Fortsatz (24) zu gelangen.

9. Mit einem Instrument versehene Wälzlagervorrichtung (1), die einen nichtdrehenden Ring (3) und Aufnahmemittel (26,29), ein Drehteil, das einen drehenden Ring (2) und Gebermittel (15) aufweist, und Wälzkörper (6) besitzt, die zwischen den Laufbahnen (4,5) der drehenden (2) und nichtdrehenden (3) Ringe angeordnet sind, **dadurch gekennzeichnet, dass** die Aufnahmemittel einen Befestigungshalter (21) an dem nichtdrehenden Ring (3) nach einem der vorhergehenden Ansprüche aufweisen.

10. Vorrichtung nach Anspruch 9, **dadurch gekennzeichnet, dass** der Riegel (28) und/oder der Körper (22) des Halters (21) Erfassungselemente (29,26) der Aufnahmemittel trägt.

11. Vorrichtung nach Anspruch 9 oder 10, **dadurch gekennzeichnet, dass** der Riegel (28) und/oder der Körper (22) des Halters (21) Verarbeitungsmittel (48) für ein Messsignal trägt.

12. Vorrichtung nach einem der Ansprüche 9 bis 11, **dadurch gekennzeichnet, dass** der Riegel (28) einen Verbindungsbereich (41) aufweist, der Anschlussmittel (52,53,54) trägt.

13. Verfahren zur Montage eines mit Instrumenten versehenen Wälzlagers (1), das einen nichtdrehenden Teil, der einen nichtdrehenden Ring (3) und Aufnahmemittel aufweist, einen drehenden Teil, der einen drehenden Ring (2) und Gebermittel aufweist, und Wälzkörper (6) besitzt, die zwischen den Laufbahnen (4,5) des drehenden Rings (2) und nichtdrehenden Rings (3) angeordnet sind, **dadurch gekennzeichnet, dass** man die Aufnahmemittel an dem nichtdrehenden Ring (3) mit Hilfe eines Halters (21) durch eine Veränderung des Durchmessers eines Körpers (22) des Halters und ein Einrücken eines Vorsprungs (23) des Körpers (22) in eine entsprechende Nut des nichtdrehenden Rings (3) befestigt, um eine Befestigung durch radialen Eingriff zu ermöglichen, und man eine Veränderung des Durchmessers des Körpers (22) mit der Hilfe eines Riegels (28) unterbindet.
